# EUROPEAN PATENT APPLICATION

(11) **EP 4 171 134 A1**
(43) Date of publication of application: **26.04.2023**
(21) Application number: 21829997.2
(22) Date of filing: 09.06.2021
(51) Int. Cl.: H04W 64/00

(54) **POSITIONING METHOD AND APPARATUS, AND COMPUTER-READABLE STORAGE MEDIUM**

(30) Priority: 22.06.2020 CN 202010574899
(71) Applicant: ZTE Corporation, Shenzhen, Guangdong 518057 (CN)
(72) Inventor: PU, Lihong, Shenzhen, Guangdong 518057 (CN); ZENG, Gang, Shenzhen, Guangdong 518057 (CN)
(74) Representative: Savi, Massimiliano
(86) International application number: PCT/CN2021/099199
(87) International publication number: WO 2021/259067

(57) **Abstract**

A positioning method and apparatus, and a computer-readable storage medium. The positioning method comprises: acquiring a positioning request, wherein the positioning request is used for positioning a terminal (S 100); determining a positioningnetwork element according to the positioning request (S200); determining a positioning processing resource according to the positioning request (S300); and allocating the positioning processing resource to the positioning network element, such that the positioning networkelement executes positioning processing on the terminal according to the positioning processing resource (S400).

## Description

### CROSS-REFERENCE TO RELATED APPLICATION

This application is based on and claims the priority of Chinese patent application No. 202010574899.3 filed on June 22, 2020, the disclosure of which is incorporated herein by reference in its entirety.

### TECHNICAL FIELD

The present disclosure relates to the technical field of communications, in particular to a locating method and apparatus, and a computer-readable storage medium.

### BACKGROUND

In the field of network communications, various network types have been introduced (from 2G to 5G) and are still developing and different network types correspond to different locating network elements. According to a traditional locating network element deployment, locating network elements under different network types are deployed independently. Generally speaking, after receiving a corresponding location request, a locating network element will perform location processing according to the location request, but in fact, the location request may correspond to a number of different locating network elements. Therefore, in an actual locating situation, it is necessary for multiple locating network elements to perform locating one by one. Although a locating result of a finally matched terminal device can be obtained in such a manner, the locating by multiple locating network elements separately is complicated and the terminal device locating efficiency is low.

### SUMMARY

The following is a summary of the subject matters described in detail herein. This summary is not intended to limit the scope of protection of the claims.

A further embodiment of the present disclosure provides a locating method and apparatus and a computer-readable storage medium.

In accordance with a first aspect, an embodiment of the present disclosure provides a locating method applied to a location management module, including:
acquiring a location request for locating a terminal device;
determining a locating network element according to the location request;
determining a location processing resource according to the location request; and
allocating the location processing resource to the locating network element, such that the locating network element executes location processing for the terminal device according to the location processing resource.

In accordance with a second aspect, a further embodiment of the present disclosure provides a locating method applied to a locating network element, including:
acquiring a location processing resource, the location processing resource being determined by a location management module according to a location request; and
executing location processing for a terminal device according to the location processing resource.

In accordance with a third aspect, a further embodiment of the present disclosure provides a locating apparatus, including a memory, a processor, and a program stored in the memory and executable by the processor, where the program, when executed by the processor, causes the processor to implement any one of the locating methods described above.

In accordance with a fourth aspect, a further embodiment of the present disclosure provides a locating apparatus storing computer-executable instructions for performing any one of the locating methods described above.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims and the accompanying drawings.

### BRIEF DESCRIPTION OF DRAWINGS

The accompanying drawings are used to provide further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
Fig. 1 is a schematic diagram of a system architecture platform for performing a locating method provided by an embodiment of the present disclosure;
Fig. 2 is a flowchart of a locating method provided by an embodiment of the present disclosure;
Fig. 3 is a flowchart of a locating method provided by another embodiment of the present disclosure;
Fig. 4 is a flowchart of a locating method provided by another embodiment of the present disclosure;
Fig. 5 is a schematic diagram of a locating method implemented by a locating network element in some situations in this field;
Fig. 6 is a flowchart of a locating method provided by another embodiment of the present disclosure; and
Fig. 7 is a flowchart of a locating method provided by another embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It should be noted that although a functional module division is shown in the schematic diagrams of the device and a logical order is shown in the flowcharts, the steps shown or described may be performed, in some cases, in a different module division from that of the device or in a different order from that in the flowcharts. The terms "first", "second", etc. in the description, the claims and the above-mentioned drawings are intended to distinguish between similar objects and are not necessarily to describe a specific order or sequence.

The present disclosure provides a locating method and apparatus and a computer-readable storage medium. A location request is acquired based on a location management module, a locating network element which is to locate a terminal device is determined according to the location request, such that a location processing resource is provided for the selected locating network element, and then the locating network element executes location processing for the terminal device according to the location processing resource. In this way, the situation that a plurality of locating network elements are required to perform locating one by one is avoided, thereby improving terminal device locating efficiency.

The embodiments of the present disclosure will be further explained below with reference to the accompanying drawings.

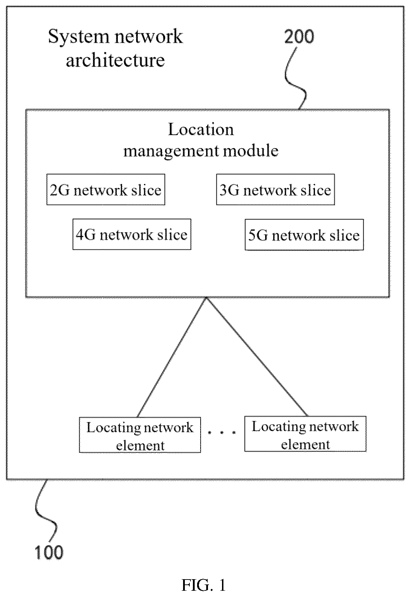

As shown, Fig. 1 is a schematic diagram of a system architecture platform 100 for performing a locating method provided by an embodiment of the present disclosure.

In the example in Fig. 1, the system architecture platform 100 includes a location management module 200 and several locating network elements, and the location management module 200 incorporates several network slices. Slicing is a term in the field of communications, which refers to the reorganization of resources based on the concept of logic. Reorganization is to select the required virtual machines and physical resources for a specific communication service type according to the service level agreement. In this location management module 200, the network types and locating network elements corresponding to different network slices are different. For example, the network types corresponding to 3G network slices and 4G network slices are 3G network and 4G network, respectively. Correspondingly, the matched locating network elements are used for locating terminal devices under the 3G network and the 4G network, respectively.

In an embodiment, a locating network element corresponding to the 2G network may be a serving mobile location center (SMLC), a locating network element corresponding to the 3G network may be a stand-alone serving mobile location center (SAS), a locating network element corresponding to the 4G network may be an enhanced serving mobile location center (ESMLC), and a locating network element corresponding to the 5G network may be a location management function (LMF).

In this embodiment, when the location management module 200 performs location management, a corresponding locating network element can be determined according to a location request, so as to determine a network slice corresponding to the locating network element, and then allocate a corresponding location processing resource to the locating network element based on the network slice. This is different from a traditional method in which a location processing resource of the locating network element is fixed, and by allocating a more reasonable location processing resource to the locating network element according to actual needs, the locating efficiency of locating network element is higher, and resource waste caused by locating network elements with little relevance can be avoided.

In this embodiment, the location processing resource can be, but is not limited to, a CPU performance resource, a media resource, a signal transmission resource, etc. It is worth noting that tools, media and conditions used by those having ordinary skill in the art in the locating process based on the locating network element can all be regarded as location processing resources, which is not limited in this embodiment.

Based on the above embodiments, specific examples are given for explanation.

### Example One:

First of all, as used in the prior art, a fixed initial processing resource is provided for each locating network element. For convenience of explanation, it is assumed that SMLC has 20% of network resources, SAS has 30% of network resources, ESMLC has 35% of network resources and LMF has 15% of network resources. Then, according to a location request, the location management module 200 finds that the locating network element matched with the terminal device is ESMLC, that is, the terminal device needs to be located under the 4G network condition. SMLC, SAS and LMF occupy some network resources too, but they are of little use for the locating based on the location request, that is, invalid network resources. Therefore, the location management module 200 can increase the network resources of the ESMLC to 70% based on a 4G network slice, that is, 35% of the network resources of other locating network elements are allocated to the ESMLC. In this way, the waste of network resources of the locating network elements can be reduced. At the same time, because ESMLC now have more network resources, the terminal device locating accuracy of ESMLC can be improved.

It is worth noting that various locating network elements can be determined according to a location request, for example, terminal devices which can be located under the 5G network condition can also be located under the 4G network condition. In a situation like this, the location management module 200 can still allocate corresponding location processing resources to these locating network elements. The basic principle is the same as that described in Example 1, and will not be repeated here to avoid redundancy.

The system architecture platform 100 and an application scenario described in the embodiment of the present disclosure are for more clearly describing the technical schemes of the embodiments of the present disclosure, and do not constitute a limitation on the technical schemes provided by the embodiments of the present disclosure. Those having ordinary skill in the art may understand that, with architecture evolution of the system architecture platform 100 and emergence of new application scenarios, the technical schemes provided by the embodiments of the present disclosure are also applicable to similar technical problems.

Those having ordinary skill in the art may understand that the system architecture platform 100 shown in Fig. 1 does not constitute a limitation on the embodiments of the present disclosure and may include more or fewer components than illustrated, or combine some of the components, or use a different arrangement of the components.

Based on the system architecture platform 100, various embodiments of the locating method of the present disclosure are provided.

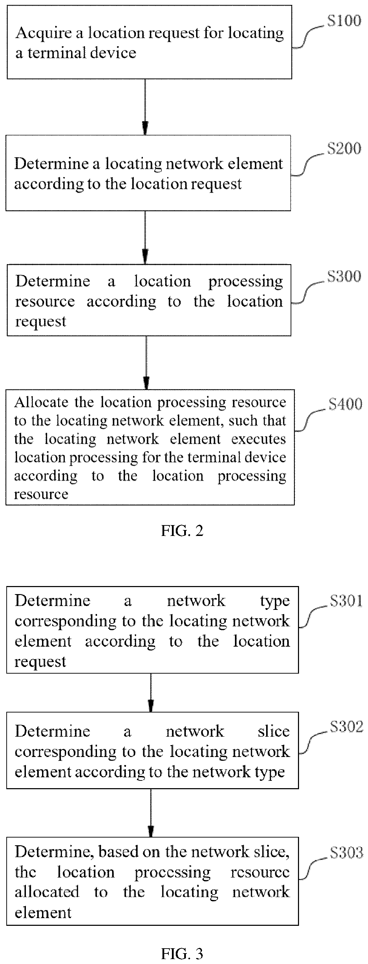

As shown in Fig. 2 which is a flowchart of a locating method provided by an embodiment of the present disclosure, the locating method can be applied to the location management module in the embodiment shown in Fig. 1, and the locating method includes but is not limited to the following steps.

At S100, a location request for locating a terminal device is acquired.

At S200, a locating network element is determined according to the location request.

At S300, a location processing resource is determined according to the location request.

At S400, the location processing resource is allocated to the locating network element, such that the locating network element executes location processing for the terminal device according to the location processing resource.

In an embodiment, a location request is acquired based on a location management module, a locating network element which is to locate a terminal device is determined according to the location request, such that a location processing resource is provided for the selected locating network element, and then the locating network element executes location processing for the terminal device according to the location processing resource. It can be seen that the terminal device can be located in real time without requiring a plurality of locating network elements to execute location processing one by one, thereby improving terminal device locating efficiency. Moreover, compared with the traditional technology, by allocating the location processing resource to the locating network element, the locating network element can locate the terminal device based on richer resources, such that a more comprehensive and reasonable locating result with a smaller error can be obtained, and terminal device locating accuracy can be greatly improved.

In an embodiment, the location request can be provided by a service provider (SP), and the location request carries terminal device location information of a target to be located, that is, the location request is used for locating the terminal device, and then the location request can be authenticated based on a gateway mobile location center (GMLC), so as to determine whether a user has the right to access the location request. If so, it means that the authentication is passed, and then the location request is sent to a network system, and because the location management module is arranged in the network system, the location management module can directly obtain the location request.

Further, in an embodiment, step S200 may include but is not limited to:
acquiring location information of the terminal device from the location request; and
determining a locating network element corresponding to the terminal device according to the location information.

After obtaining the location request, the location management module can obtain the location information of the terminal device from the location request, and the location information can represent target location information of the terminal device, and can be but is not limited to one or more of the parameters such as location network type, location target distance and location coordinates. Correspondingly, the location management module can determine the locating network element according to the location information, that is, the terminal device is located by the determined locating network element. It can be seen that determining the locating network element based on the location information of the terminal device can ensure a good matching between the terminal device and the locating network element, which helps optimize the terminal device locating effect.

Further, in an embodiment, as shown in Fig. 3, step S300 includes, but is not limited to, the following substeps.

At 301, a network type corresponding to the locating network element is determined according to the location request.

At 302, a network slice corresponding to the locating network element is determined according to the network type.

At 303, the location processing resource allocated to the locating network element is determined based on the network slice.

In an embodiment, by determining the network type corresponding to the locating network element, that is, determining a network matching type of the terminal device to be located, the network slice corresponding to the network type can be further found, such that the location processing resource allocated to the locating network element can be further determined based on the network slice, so as to provide richer location processing resources for the locating network element to perform locating, which is beneficial to locating. It is worth noting that the locating network element may correspond to more than one network type, and accordingly, more than one network slice may be determined, which is not limited in this embodiment.

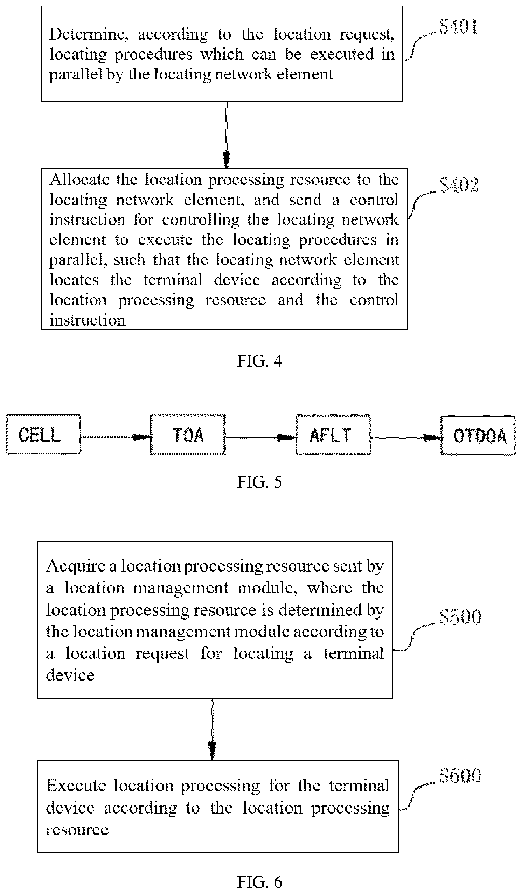

Further, in an embodiment, as shown in Fig. 4, step S400 includes, but is not limited to the following substeps.

At S401, locating procedures which can be executed in parallel by the locating network element are determined according to the location request.

At S402, the location processing resource is allocated to the locating network element, and a control instruction for controlling the locating network element to execute the locating procedures in parallel is sent, such that the locating network element locates the terminal device according to the location processing resource and the control instruction.

In an embodiment, the locating procedures which can be executed may include but are not limited to:
a base station (CELL) locating procedure;
a Global Positioning System (GPS) locating procedure;
a Time of Arrival (TOA) locating procedure;
a Time Difference of Arrival (TDOA) locating procedure;
an Observed Time Difference of Arrival (OTDOA) locating procedure; and
an advanced forward link three edge measurement (AFLT) locating procedure.

The above locating procedures can be executed by the locating network element separately or in parallel.

Specifically, in the prior art, a locating method performed by a single locating network element is of a "serial type", as shown in Fig. 5, which is a flowchart of a locating method implemented by a locating network element in the prior art, that is, the locating network element executes several selected locating procedures in succession, such as CELL, TOA, AFLT and OTDOA shown in Fig. 5; and the next locating procedure is executed only when the currently selected locating procedure is abnormal or the locating accuracy is not up to standard. It can be seen that the locating procedures are executed like in an assembly line, the overall locating time is long, and the locating accuracy cannot be guaranteed. Based on this, in this embodiment, firstly, locating procedures which can be executed by a locating network element in parallel are determined, that is, a method different from the traditional "serial" method, and while sending a location processing resource to the locating network element, a control instruction for controlling the locating network element to execute the locating procedures in parallel is sent to the locating network element, that is, making the locating network element execute the selected locating procedures in parallel through the control instruction. Obviously, because the locating procedures are executed in parallel, overall execution time is relatively short, thus greatly shortening the locating time. Moreover, by executing the locating procedures in parallel, locating procedures which are abnormal or of which the locating accuracy is not up to standard can be found out more easily. Therefore, by enabling the locating network element to locate the terminal device according to the location processing resource and the control instruction, the locating network element can adopt a reasonable and reliable locating procedure and has stable location processing resources to support the locating, which can improve the locating accuracy and efficiency of the locating network element.

As shown in Fig. 6 which is a flowchart of a locating method provided by another embodiment of the present disclosure, the locating method can be applied to the locating network element in the embodiment shown in Fig. 1, and the locating method includes but is not limited to the following steps.

At S500, a location processing resource sent by a location management module is acquired, where the location processing resource is determined by the location management module according to a location request for locating a terminal device.

At S600, location processing is executed for the terminal device according to the location processing resource.

In an embodiment, the locating network element can acquire the location processing resource sent by the location management module, and then execute location processing for the terminal device according to the location processing resource. Compared with the prior art, the locating network element can obtain more reasonable and reliable network resources for locating, so the locating accuracy of the locating network element can be improved; moreover, since the location processing resource is determined by the location management module according to the location request, and the location request carries the location information of the terminal device, the location processing resource is allocated based on the terminal device information, which allows the locating network element which acquires the location processing resource to well match and locate the corresponding terminal device.

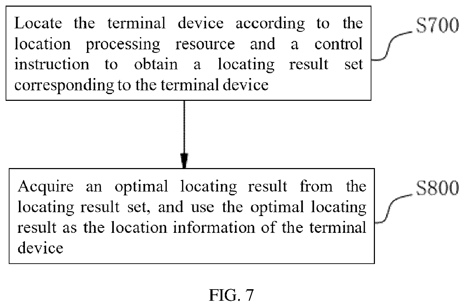

Further, in an embodiment, as shown in Fig. 7, the locating method may further include but is not limited to the following steps.

At S700, the terminal device is located according to the location processing resource and a control instruction to obtain a locating result set corresponding to the terminal device.

At S800, an optimal locating result is acquired from the locating result set and used as the location information of the terminal device.

In an embodiment, the location processing resource acquired by the locating network element includes not only the location processing resource determined and sent by the location management module according to the location request, but also the control instruction sent by the location management module, the control instruction can control the locating network element to execute the determined locating procedures in parallel, and the locating procedures can be executed by the locating network element in parallel. Therefore, by locating the terminal device according to the location processing resource and the control instruction, the locating result set corresponding to the terminal device can be obtained. The basic concept and implementation of this embodiment are consistent with those of the embodiment shown in Fig. 5, and will not be repeated here to avoid redundancy. After all the locating results of the terminal device are obtained, the locating results are screened to pick out the optimal locating result, and the optimal locating result is used as the location information of the terminal device, which means the locating is completed. It can be seen that the optimal locating result of the terminal device can be found by collecting and screening all the locating results, and this method is relatively simple and can be realized without spending a lot of time and energy, such that terminal device locating efficiency can be improved to a certain extent. It is worth noting that the optimal locating result is not unique or predetermined, but is selected according to specific criteria. As many factors affect the locating in practice, when selecting the optimal locating result, those having ordinary skill in the art can set corresponding criteria according to the locating factors concerned, so as to select an appropriate optimal locating result. For example, the criteria can be determined according to locating accuracy, locating distance, locating time and so on.

Further, in an embodiment, step S700 may further include, but is not limited to:
executing the locating procedures in parallel according to the location processing resource and the control instruction to obtain a locating result set corresponding to the terminal device.

In an embodiment, after obtaining the location processing resource and the control instruction, the locating network element can execute the locating procedures in parallel according to the location processing resource and the control instruction. Because the locating procedures are executed in parallel, each locating procedure will correspond to a locating result, and finally, a locating result set corresponding to all the locating procedures will be obtained. It can be seen that all the locating results of the terminal device can be directly obtained in this way, which can ensure that no locating result will be omitted and guarantee the completeness of the locating results of the terminal device.

In an embodiment, the locating network element can repeatedly execute the locating methods in the above embodiments related to step 500 and step 600, that is, each execution is equivalent to triggering locating measurement once. Finally, by triggering the measurement many times, a large number of effective locating results can be obtained, and then the location information of the terminal device can be screened out. It can be seen that this method can obtain stable and effective measurement results and greatly reduce the error of locating measurement.

In an embodiment, After obtaining the location information of the terminal device, the locating network element can send the location information to the SP through the GMLC, such that the SP can keep the location information of the terminal device and push it out accordingly, thus ensuring the circulation of the location information of the terminal device.

In addition, a further embodiment of the present disclosure provides a locating apparatus, including a memory, a processor, and a computer program stored in the memory and executable by the processor.

The processor and the memory may be connected by a bus or by other means.

It should be noted that the locating apparatus in this embodiment can be applied to the location management module in the embodiment shown in Fig. 1, and can also be applied to the locating network element in the embodiment shown in Fig. 1. The locating apparatus of this embodiment can form a part of the system architecture platform of the embodiment shown in Fig. 1. This embodiment and the embodiment shown in Fig. 1 have the same inventive concept, so this embodiment has the same implementation principle and technical effect as the embodiment shown in Fig. 1, which will not be repeated here.

Non-transient software programs and instructions required to realize the locating method in the above embodiments are stored in the memory, and when executed by the processor, cause the processor to implement the locating methods in the above embodiments, for example, execute the above-described method steps S100 to S400 in Fig. 2, S301 to S303 in Fig. 3, S401 to S402 in Fig. 4, S500 to S600 in Fig. 6, or S700 to S800 in Fig. 7.

The apparatus embodiments described above are only for illustration. The units described as separate components may or may not be physically separated, that is, they may be located at one place or distributed to multiple network units. Some or all of the modules can be selected according to actual needs to achieve the purpose of the apparatus embodiments described above.

Furthermore, an embodiment of the present disclosure also provides a computer-readable storage medium which stores computer-executable instructions which, when executed by a processor or controller, for example, the processor in the above-mentioned embodiment of the locating apparatus, can cause the processor to implement the locating methods in the above embodiments, for example, execute the above-described method steps S100 to S400 in Fig. 2, S301 to S303 in Fig. 3, S401 to S402 in Fig. 4, S500 to S600 in Fig. 6, or S700 to S800 in Fig. 7.

The embodiments of the present disclosure include: acquiring a location request for locating a terminal device; determining a locating network element according to the location request; determining a location processing resource according to the location request; and allocating the location processing resource to the locating network element, such that the locating network element executes location processing for the terminal device according to the location processing resource. According to the scheme provided by the embodiments of the present disclosure, a location request is acquired based on a location management module, a locating network element which is to locate a terminal device is determined according to the location request, such that a location processing resource is provided for the selected locating network element, and then the locating network element executes location processing for the terminal device according to the location processing resource. In this way, the situation that a plurality of locating network elements are required to perform locating one by one is avoided, thereby improving terminal device locating efficiency.

It can be understood by those having ordinary skill in the art that all or some of the steps of the methods and systems disclosed above can be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software can be distributed on computer-readable media, which can include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and can include any information transmission media.

The above is a detailed description of some embodiments of the present disclosure, but the present disclosure is not limited to the above-mentioned embodiments. Those of ordinary skill in the art can also make various equivalent modifications or replacements without departing from the scope of the present disclosure, and these equivalent modifications or replacements are all included in the scope defined by the claims of the present disclosure.

## Claims

1. A locating method, comprising:
acquiring a location request for locating a terminal device;
determining a locating network element according to the location request;
determining a location processing resource according to the location request; and
allocating the location processing resource to the locating network element, such that the locating network element executes location processing for the terminal device according to the location processing resource.

2. The locating method of claim 1, wherein, determining a locating network element according to the location request, comprises:
acquiring location information of the terminal device from the location request; and
determining the locating network element corresponding to the terminal device according to the location information.

3. The locating method of claim 1, wherein, determining a location processing resource according to the location request, comprises:
determining a network type corresponding to the locating network element according to the location request;
determining a network slice corresponding to the locating network element according to the network type; and
determining the location processing resource allocated to the locating network element based on the network slice.

4. The locating method of any one of claims 1 to 3, wherein, allocating the location processing resource to the locating network element, such that the locating network element executes location processing for the terminal device according to the location processing resource, comprises:
determining, according to the location request, locating procedures executable in parallel by the locating network element; and
allocating the location processing resource to the locating network element, and sending a control instruction for controlling the locating network element to execute the locating procedures in parallel, such that the locating network element locates the terminal device according to the location processing resource and the control instruction.

5. A locating method, comprising:
acquiring a location processing resource sent by a location management module, the location processing resource being determined by the location management module according to a location request for locating a terminal device; and
executing location processing for the terminal device according to the location processing resource.

6. The locating method of claim 5,further comprising:
acquiring a control instruction sent by the location management module, wherein the control instruction is used for controlling the locating network element to execute in parallel the locating procedures determined by the location management module, and the locating procedures are determined by the location management module according to the location request.

7. The locating method of claim 6, wherein executing location processing for a terminal device according to the location processing resource comprises:
locating the terminal device according to the location processing resource and the control instruction to obtain a locating result set corresponding to the terminal device; and
acquiring an optimal locating result from the locating result set, and using the optimal locating result as the location information of the terminal device.

8. The locating method of claim 7, wherein locating the terminal device according to the location processing resource and the control instruction to obtain a locating result set corresponding to the terminal device comprises:
executing the locating procedures in parallel according to the location processing resource and the control instruction to obtain the locating result set corresponding to the terminal device.

9. A locating apparatus, including a memory, a processor, and a program stored in the memory and executable by the processor, wherein the program, when executed by the processor, causes the processor to implement the locating method of any one of claims 1 to 4 or the locating method of any one of claims 5 to 8.

10. A computer-readable storage medium storing computer-executable instructions, wherein the computer-executable instructions are configured to cause a computer to implement the locating method of any one of claims 1 to 4 or the locating method of any one of claims 5 to 8.
